(19) Europäisches Patentamt
European Patent Office
Office européen des brevets

(11) **EP 1 882 918 B1**

(12) **EUROPÄISCHE PATENTSCHRIFT**

(45) Veröffentlichungstag und Bekanntmachung des Hinweises auf die Patenterteilung:
**04.05.2011 Patentblatt 2011/18**

(51) Int Cl.:
***G01J 3/52*** *(2006.01)*

(21) Anmeldenummer: **07112376.4**

(22) Anmeldetag: **12.07.2007**

(54) **Verfahren zur Herstellung von Zahnersatzfarben**

Method for manufacturing tooth replacement dyes

Procédé de fabrication de colorations de prothèses dentaires

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.07.2006 DE 102006034329**
**21.10.2006 DE 102006049743**

(43) Veröffentlichungstag der Anmeldung:
**30.01.2008 Patentblatt 2008/05**

(60) Teilanmeldung:
**10185970.0 / 2 280 261**

(73) Patentinhaber: **DeguDent GmbH**
**63457 Hanau (DE)**

(72) Erfinder: **Krumbholz, Klaus**
**97297 Waldbüttelbrunn (DE)**

(74) Vertreter: **Stoffregen, Hans-Herbert**
**Patentanwalt**
**Friedrich-Ebert-Anlage 11b**
**63450 Hanau (DE)**

(56) Entgegenhaltungen:
**EP-A- 0 147 232     EP-A- 0 591 958**
**FR-A- 2 685 769**

EP 1 882 918 B1

## Beschreibung

Die Erfindung bezieht sich auf ein Verfahren zur Herstellung von Zahnersatzfarben für von einem Restgebiss umgebenen Zahnersatz unter Verwendung von Grund- und/oder Mischfarben, deren Koordinaten im CIELab-Farbraum liegen, in dem die Zahnfarben der natürlichen Zähne im Wesentlichen auf Koordinaten eines ellipsoidförmigen Raumes liegen, dem eine Längsachse oder eine von hell nach dunkel im CIELab-Raum verlaufende Basislinie zugeordnet ist, wobei die Farbe des Restgebisses in Koordinaten des CIELab-Farbraumes ermittelt werden.

Zahnrestaurationen in Form von zum Beispiel Kronen oder Brücken werden üblicherweise aus einem tragenden Gerüstmaterial bestehend aus einem Metall, einer Legierung oder einer hochfesten Keramik hergestellt, die mit einem zahnfarbenen Material aus Kunststoff und/oder Keramik verblendet wird. Um ästhetischen Anforderungen zu genügen, muss die Farbe der Restauration der Farbe des natürlichen Restgebisses angeglichen sein. Um dies annähernd sicherzustellen, werden Verblendmaterialien in mehreren Zahnfarben angeboten. Von den verfügbaren Zahnfarben werden Muster in Zahnform hergestellt und zu so genannten Farbindikatoren zusammengefasst. Mittels dieser Indikatoren werden die für den gegebenen Anwendungsfall angemessenen Verblendmassen ausgesucht. Um das Sortiment aus Gründen der Überschaubarkeit und der Lagerhaltungskosten handhabbar zu machen, wird die Anzahl der verfügbaren Zahnfarben begrenzt. Indikatoren führender Hersteller enthalten daher 16 bis 26 Farben. Diese Begrenzung hat jedoch den Nachteil, dass in vielen Fällen die Zahnfarbe der Zahnrestauration nicht im hinreichenden Umfang an die Farbe des Restgebisses angeglichen ist.

Idealerweise müsste daher, um diesen Nachteil zu vermeiden, ein Farbsystem zur Verfügung stehen, das den Farbraum der natürlichen Zähne in einem Umfang abdeckt, dass die Abstände der einzelnen Farben an der Unterscheidungsmöglichkeit eines normalsichtigen Menschen orientiert ist. In diesem Fall wäre jedoch die Anzahl der Farben so hoch, dass ein sinnvolles Sortiment nicht mehr zur Verfügung gestellt werden könnte. Auch wäre ein Farbindikator, der alle Farben abbildet, nicht mehr handhabbar.

In der Praxis ist ein VITAPAN 3D-Master-Farbsystem bekannt, das die häufigsten Zahnfarben in den Mittelpunkt stellt. Dabei werden die zur Verfügung gestellten Zahnersatzfarben gezielt in Ebenen angeordnet, die im CIELab-Farbraum innerhalb des die Form einer aufrecht stehenden Banane aufweisenden ellipsoidförmigen Raums liegen, der die üblicherweise auftretenden natürlichen Zahnfarben erfasst. Um eine Ersatzfarbe zu bestimmen, wird sodann in einem ersten Schritt die Helligkeitsstufe und in einem zweiten Schritt die Farbintensität ermittelt. In einem dritten Schritt wird sodann der Farbton bestimmt. Hierzu stehen Muster von entsprechend gefärbten Zähnen zur Verfügung.

Zahnersatzfarbenindikatoren mit einer Vielzahl von Sätzen von Farbmustern sind aus der EP-A-0 147 232 und der EP-B-0 591 958 bekannt. Dabei liegen die Koordinaten von Farbmustern jeweils eines Satzes in einer Ebene gleicher Helligkeit, die senkrecht zur L-Achse des CIELab-Koordinatensystems verläuft. Erste Grundfarben der parallel zueinander verlaufenden Ebene liegen auf einer gemeinsamen Geraden, die versetzt zu der L-Achse verläuft. Jedes Farbmuster geht von einer fächerartig ausgebildeten Halterung aus.

Um den Farbton eines Zahnersatzes zu bestimmen und auszuwählen, wird nach der US-A-6,030,209 ein Spektrophotometer eingesetzt. Die den herzustellenden Zahnersatz umgebenden Zähne werden unterschiedlich beleuchtet, um sodann das reflektierte Licht unter Korrektur des Umgebungslichtes auszuwerten. Sodann werden aus einer Vielzahl von zur Verfügung stehenden Farbmassen einige ausgewählt und gemischt, um den gewünschten Farbton für den Zahnersatz zu erhalten.

Die EP-B-1 068 841 bezieht sich auf ein Zahnfarbsystem mit einer Menge von unterschiedlichen Farbproben, die in Bezug auf Helligkeit, Farbsättigung und Farbton äquidistant auf wenigstens einer Dreiecksäule im CIELab-Raum angeordnet sind.

Der Erfindung liegt die Aufgabe zugrunde, ein Verfahren zur Herstellung von Zahnersatzfarben zur Verfügung zu stellen, bei dem die für die Zahnersatzfarben benötigten Mischfarben aus einer geringen Zahl von Grundfarben herstellbar sind, die im CIELab-Farbraum festgelegt werden.

Zur Lösung der Aufgabe sieht die Erfindung vor, dass die Farbe des Restgebisses mittels eines Messgerätes gemessen wird, dass von dem Messgerät den CIELab-Koordinaten der Farbe entsprechende Daten einem Rechner zugeführt werden, in dem den CIELab-Koordinaten der Grund- und Mischfarben entsprechende Daten abgespeichert und mit den Daten der Farbe des Restgebisses verglichen werden, wobei Koordinaten von ersten Grundfarben auf der Längsachse oder der Basislinie des ellipsoidförmigen Raumes liegen, Koordinaten von zweiten Grundfarben in zumindest zwei zueinander beabstandeten Ebenen und außerhalb des ellipsoidförmigen Raums liegen, die die Längsachse oder die Basislinie senkrecht schneiden, Koordinaten von Mischfarben auf Schnittpunkten von parallel zu der Längsachse oder der Basislinie verlaufenden ersten Geraden und Verbindungsgeraden zwischen Koordinaten der ersten und zweiten Grundfarben liegen, wobei jede Mischfarbe eine Mischung aus einer ersten und einer zweiten Grundfarbe unter Berücksichtigung sämtlicher erster und zweiter Grundfarben ist, und dass aufgrund des Vergleiches Informationen erzeugt werden, die das Mischungsverhältnis einer ersten und einer zweiten Grundfarbe oder die eine erste Grundfarbe zur Verwendung als die Zahnersatzfarbe betreffen, wobei die zu den Koordinaten der Farbe des Restgebisses am nächsten liegenden Koordinaten einer der Misch- oder Grundfarben als die Zahnersatzfarbe ausgewählt wird.

**EP 1 882 918 B1**

Die Farbe des Restgebisses wird mit einem Messgerät gemessen, wobei von dem Messgerät den CIELab-Koordinaten der Farbe entsprechenden Daten einem Rechner zugeführt werden, in dem den CIELab-Koordinaten der Grund- und Mischfarben entsprechende Daten abgespeichert und mit den Daten der Farbe des Restgebisses verglichen werden, und aufgrund des Vergleichs Informationen erzeugt werden, die das Mischungsverhältnis einer ersten und einer zweiten Grundfarbe oder die einer ersten Grundfarbe zur Verwendung als die Zahnersatzfarbe betreffen. Dabei kann eine zweite Grundfarbe auch als Zahnersatzfarbe benutzt werden, sofern die zweite Grundfarbe innerhalb des ellipsoidförmigen Raumes bzw. auf dessen Umgrenzung liegt.

Erfindungsgemäß erfolgt die Farbnahme an einem Patienten und die Kontrolle der fertig gestellten Zahnrestauration nicht mittels eines Farbindikators, sondern mit einem Messgerät, welches die mit dem aufgrund der vorhandenen Grund- sowie Mischfarben angebotenen Massensortiment erreichbaren Farben in einem integrierten Computer gespeichert hat. Der Computer vergleicht die gemessenen Farbwerte mit den gespeicherten Daten und empfiehlt eine entsprechende codierte Farbe für die Restauration. Das Massensortiment, also die Anzahl der ersten und zweiten Grundfarben, beschränkt sich auf wenige Farben, aus welchen sodann durch Mischen in einfachen Mischungsverhältnissen die gewünschte Zahnfarbe hergestellt wird. Für die Darstellung der Farben wird das CIELab-System verwendet. Die aus den messtechnisch ermittelten Normfarbwerten errechneten L*, a*, b*-Werte geben Aufschluss über Helligkeit (L*), Rotwert (a*) und Gelbwert (b*) bzw. die daraus abgeleiteten Werte für Farbstärke (c*) und Farbton (h*). Die natürlichen Zahnfarben lassen sich in dem CIELab-Raum durch den ellipsoidförmigen Körper darstellen, dessen Längs- bzw. Mittelachse von hell nach dunkel durch dessen Raum geht. Das vorgeschlagene System basiert auf einer Reihe von vorzugsweise mindestens acht und höchstens zwölf ersten Grundfarben, die auf der Längs- bzw. Mittelachse in gleichen Abständen angeordnet sind. Die ersten Grundfarben können auch als Basismassen bezeichnet werden. Die hellste bzw. dunkelste Basismasse bzw. deren Koordinaten liegen außerhalb des ellipsoidförmigen Raums, also über der dunkelsten möglichen Zahnfarbe und - unter Berücksichtigung der in der Praxis erfolgenden künstlichen Aufhellung - hellstmöglichen Farbe, um Menge und Lage der hieraus zu mischenden Farben zu optimieren.

Zur Mischung mit den Basismassen, um die Mischfarben herzustellen, werden die zweiten Grundfarben - auch als Modifikatormassen bezeichnet - bereitgestellt, die wie folgt im Farbraum angeordnet werden. So kann in der Mitte des Ellipsoids der natürlichen Zahnfarben eine kreisförmige oder gegebenenfalls elliptische Ebene angenommen werden, die von der Linie, auf der die Basismassen liegen in deren Mittelpunkt senkrecht durchstoßen wird. Diese Ebene sollte des Weiteren geringfügig über die Schnittfläche des Ellipsoids der natürlichen Zahnfarben hinausragen. Die Modifikatormassen werden auf der Peripherie dieser Ebene in gleichen Abständen angeordnet. Um sodann eine ausreichende Farbdichte zu erreichen, sollten in der Ebene sechs Modifikatormassen vorgesehen sein, die auf dem Kreis bzw. der Ellipse liegen und erwähntermaßen einen äquidistanten Abstand zueinander aufweisen. Wird nun jede dieser sechs Modifikatormassen mit jeder Basismasse im Verhältnis 1:1 gemischt, so erhält man bei acht Basismassen 8 x 6 = 48 Mischfarben auf der Basis der insgesamt vierzehn Basis- und Modifikatormassen. Zählt man die verwertbaren sechs Basisfarben hinzu, die in dem ellipsoidförmigen Raum liegen, stehen vierundfünfzig Mischfarben als Zahnfarben zur Verfügung. Erfolgt ein Mischen der Basis- und Modifikatormassen im Verhältnis 1:1, so liegen die Mischfarben im CIELab-Raum auf Geraden, die parallel zu der Mittelachse bzw. der Linie verläuft, auf der die Basismassen liegen. Die Anzahl der Modifikatormassen bestimmt folglich auch die Mindestanzahl der Geraden, auf der die Mischfarben liegen.

Mischt man Basismassen und Modifikatormassen mit zwei unterschiedlichen Mischungsverhältnissen, zum Beispiel zwei Teile Modifikatormasse mit einem Teil Basismasse, so verlaufen zwei Mischgeraden zwischen jeder Modifikatormasse und der Längs- bzw. Mittelachse des ellipsoidförmigen Raums, wobei die Abstände zwischen der Längsachse bzw. der die Basismassen enthaltenden Längs- bzw. Mittelachse zur ersten Mischgerade und von der ersten Mischgerade zur zweiten Mischgerade gleich ist. Bei dieser Gestaltung ergibt sich ein regelmäßig mit Farben gefüllter Raum mit 2 x 8 x 6 + 6 = 102 Zahnfarben.

Die Modifikatormassen werden nicht nur auf einer Helligkeitsebene angeordnet, sondern auf zwei oder mehr, wodurch die Anzahl der bereit zu stellenden Massen zwar erhöht wird, jedoch eine gleichmäßigere Verteilung von Mischfarben im CIELab-Farbraum der natürlichen Zahnfarben erfolgt.

Liegen die ersten Grundfarben, d.h. Basismassen auf der Längs- bzw. Mittelachse des ellipsoidförmigen Raums, so können diese auch auf einer hiervon abweichenden im CIELab-Raum von hell nach dunkel verlaufenden Basislinie liegen, die jedoch benachbart zu der Längs- bzw. Mittelachse verlaufen sollte.

Unabhängig hiervon ist vorgesehen, dass die in jeweils einer gemeinsamen Ebene liegenden zweiten Grundfarben auf einem Kreis mit der Längsachse bzw. der Basislinie als Mittelpunkt liegen bzw. dass die in jeweils einer gemeinsamen Ebene liegenden zweiten Grundfarben auf einer Linie liegen, die äquidistant die Schnittlinie zwischen der Ebene und der Umhüllenden des ellipsoidförmigen Raumes umgibt.

Um die Anzahl der Zahnersatzfarben zu erhöhen und somit eine noch bessere Anpassung an die Farben des Restgebisses zu ermöglichen, ist vorgesehen, dass eine zweite Gerade zumindest zwei erste Geraden schneidet. Dabei sollten die zwei ersten Geraden die zweite Gerade zwischen den Koordinaten der ersten und zweiten Grundfarbe in gleichen Verhältnissen unterteilen.

Insbesondere ist vorgesehen, dass jede zweite Gerade von jeweils einer ersten Geraden zwischen den Koordinaten der ersten und zweiten Grundfarbe im gleichen Verhältnis unterteilt ist, wobei die zumindest eine erste Gerade die zweite Gerade zwischen den Koordinaten der ersten und der zweiten Grundfarbe im Verhältnis 1: n mit n = 1, 2 oder 3 unterteilt bzw. die zumindest zwei ersten Geraden die zweite Gerade zwischen den Koordinaten der ersten und der zweiten Grundfarbe im Verhältnis 1 : n mit n = 2 oder 3 unterteilt.

Die Anzahl der ersten Grundfarben, die auf der Längsachse bzw. der Basislinie des ellipsoidförmigen Raums liegen, sollte zumindest vier, vorzugsweise jedoch zwischen acht und zwölf betragen. Dabei ist vorgesehen, dass hellste und/oder dunkelste erste Grundfarbe außerhalb des die üblichen natürlichen Zahnfarben repräsentierenden ellipsoidförmigen Raums liegen. Unabhängig hiervon schlägt die Erfindung vor, dass der Abstand aufeinander folgender erster Grundfarben zueinander gleich sein sollte. Gleiches sollte bezüglich der in der Ebene liegenden zweiten Grundfarben gelten, wobei deren Anzahl in jeder Ebene zumindest vier, vorzugsweise jedoch zumindest sechs beträgt.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:

Fig. 1    eine Prinzipdarstellung einer Anordnung zum Messen der Farben eines Restgebisses,

Fig. 2    einen Längsschnitt des die natürlichen Zähne repräsentierenden Raums im CIELab-Farbraum,

Fig. 3    einen weiteren Längsschnitt des die natürlichen Zähne repräsentierenden Raums im CIELab-Farbraum,

Fig. 4    einen der Darstellung der Fig. 3 zuzuordnenden Querschnitt des die natürlichen Zähne repräsentierenden Raums im CIELab-Farbraum,

Fig. 5    eine Prinzipdarstellung des CIELab-Farbraums,

Fig. 6    eine Prinzipdarstellung der Lagen von Mischfarben im CIELab-Farbraum und

Fig. 7    eine Prinzipdarstellung zur Ermittlung von Mischfarben.

Anhand der zeichnerischen Darstellung soll die erfindungsgemäße Lehre zur Ermittlung von Mischfarben erläutert werden, um eine Zahnersatzfarbe zu bestimmen und herzustellen, die der des den Zahnersatz umgebenden Restgebisses angepasst ist, ohne dass die Anzahl der zur Verfügung zu stellenden Mischfarben nicht handbar bzw. unübersichtlich wird.

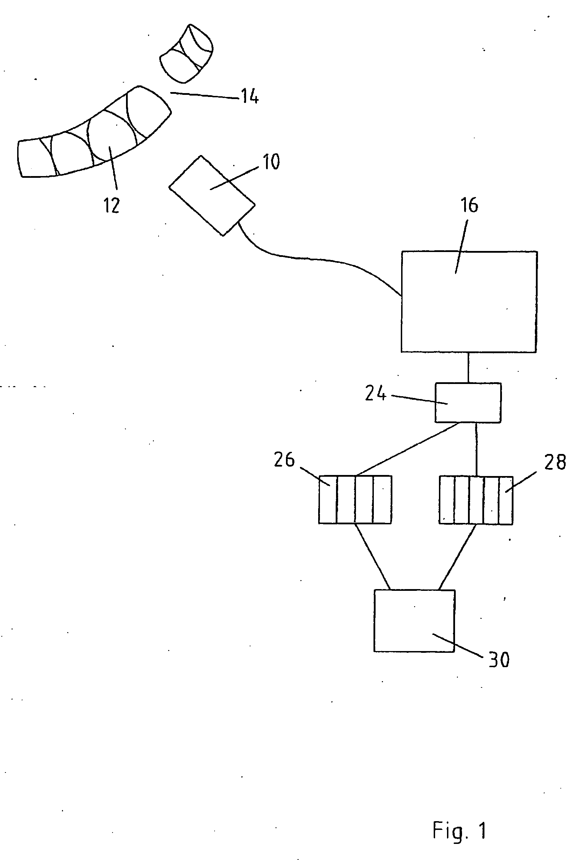

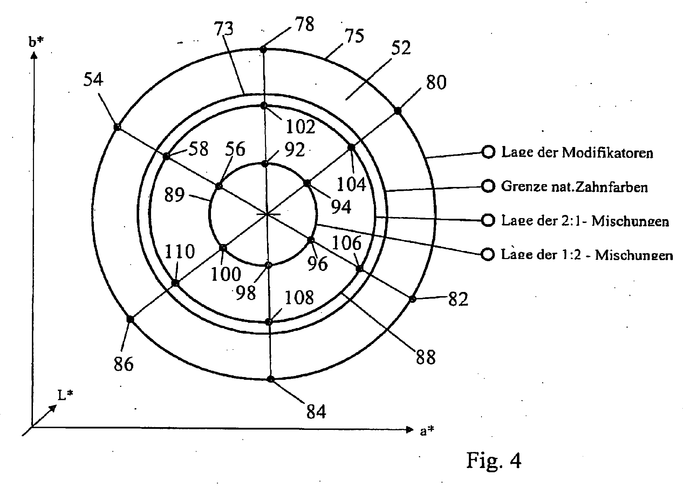

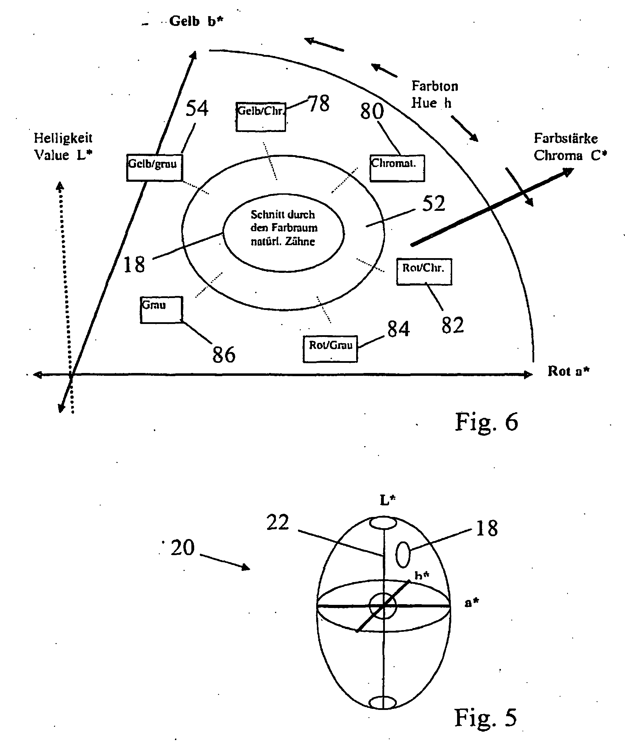

Wie sich aus der Fig. 1 ergibt, wird zunächst z. B. mittels eines Handspectrophotometers 10 die Farbe eines Restgebisses 12 aufgenommen, das eine Lücke 14 aufweist, in die ein Zahnersatz eingesetzt werden soll. Das Handspectrophotometer ist mit einem Rechner 16 verbunden, in dem in CIELab-Koordinaten die üblicherweise auftretenden natürlichen Zahnfarben abgelegt sind. Die Farben der natürlichen Zähne liegen dabei in einem ellipsoidförmigen Raum 18 des CIELab-Farbraums 20, der rein prinzipiell in der Fig. 5 dargestellt ist. Der CIELab-Farbraum wird durch die Achsen L*, a* und b* aufgespannt. Alternativ zu den a*-, b*-Werten wird der Farbton Hue h sowie die Buntheit C* (Chroma, relative Sättigung der Farbe) angegeben, wie dies aus den Fig. 4 und 5 entnehmbar ist.

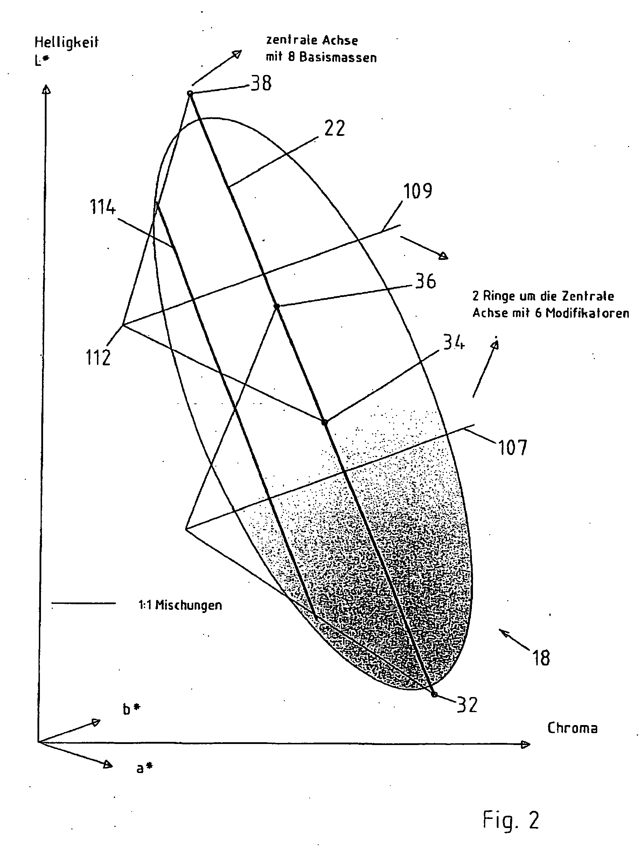

Der die natürlichen Zahnfarben repräsentierende Raum 18, von dem Schnittdarstellungen den Fig. 2, 3 und 6 zu entnehmen sind, weist eine Längs- oder Mittelachse 22 auf, die schräg zur L*-Achse verläuft.

Die mit dem Messgerät 10 ermittelten und in CIELab-Koordinaten bestimmten Farben werden mit den in dem Rechner 16 abgespeicherten Farben verglichen, um sodann Informationen 24 über zu mischende als Modifikatormassen 28 und Basismassen 26 zu bezeichnende erste und zweite Grundfarben zur Verfügung zu stellen, aus denen sodann eine Mischfarbe 30 hergestellt wird, die der Farbe des Restgebisses 12 am nächsten kommt.

Um die Anzahl der Mischfarben relativ gering zu halten, ohne dass die Abweichung der Farbe des Zahnersatzes zu der des Restgebisses wahrnehmbar ist, wird ein Zahnfarbsystem nachstehend beschriebener Art zur Verfügung gestellt.

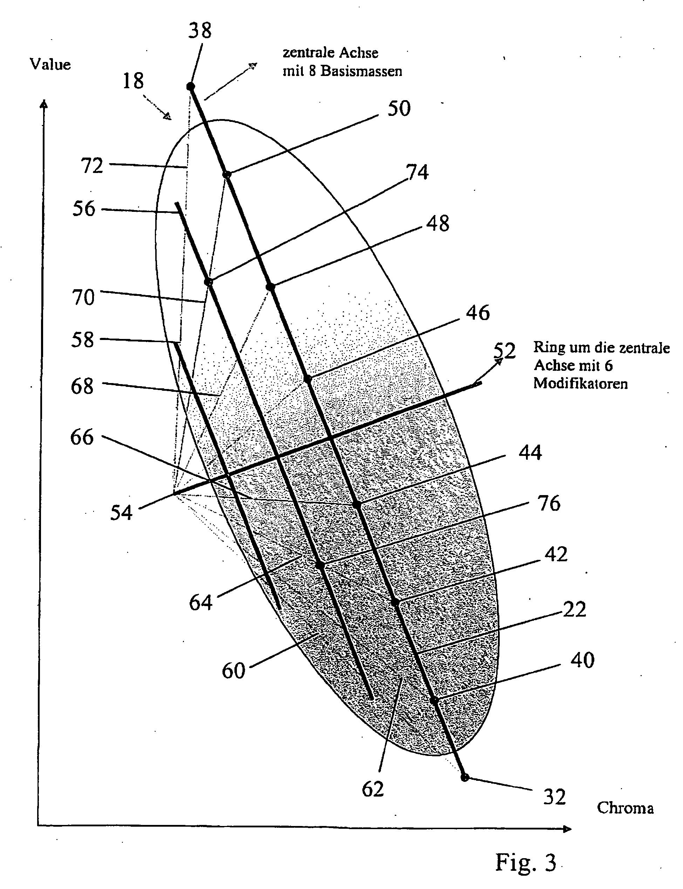

Entsprechend der Schnittdarstellungen der Fig. 2 und 3 des Farbraums 18 werden auf dessen Längsachse 22, die von hell nach dunkel verläuft, - oder auf einer ebenfalls von hell nach dunkel laufenden Basislinie - erste Grundfarben 32, 38, 40, 42, 44, 46, 48, 50 festgelegt. Dabei sollte entsprechend der Darstellungen der Fig. 2 und 3 eine Grundfarbe - im Ausführungsbeispiel die Grundfarbe 38 - über die hellstmögliche Farbe hinaus und eine zweite Grundfarbe - im Ausführungsbeispiel die Grundfarbe 32 - über die dunkelstmögliche Zahnfarbe hinaus liegen, um Menge und Lage der zu mischenden Farben zu optimieren. Ferner wird anhand der Fig. 3 verdeutlicht, dass der Abstand der Koordinaten der ersten Grundfarben 32, 38, 40, 42, 44, 46, 48, 50 äquidistant ist.

Des Weiteren werden zweite Grundfarben 54, die die Modifikatormassen 28 bilden, festgelegt. Diese liegen auf zumindest zwei zueiander beabstandeten Ebenen 52, 107, 109, die von der Mittelachse 22 mittig und senkrecht durchsetzt werden. In der Fig. 3 ist nur eine Ebene 52 dargestellt, die von der Mittelachse 22 mittig und senkrecht durchsetzt wird. Die zweiten Grundfarben 54 liegen außerhalb des Raums 18 in der Ebene 52, und zwar gleichmäßig verteilt um den Raum 18, wobei der Abstand zwischen der zweiten Grundfarbe 54 und der Umhüllung des Raums 18 gleich ist. Mit anderen Worten liegen die zweiten Grundfarben 54 auf einem Kreis, sofern die Schnittlinie zwischen der Ebene 52 und der Umhüllung des Raums 18 gleichfalls ein Kreis ist. Ergibt sich eine Ellipsenform, so liegen die zweiten Grundfarben 54 gleichfalls auf einer Ellipse.

Um aus den ersten und zweiten Grundfarben 32, 38, 40, 42, 44, 46, 48, 50 bzw. 54, also den Basismassen 26 und den Modifikatormassen 28 Mischfarben herzustellen, werden nach der Darstellung der Fig. 3 zwei erste Geraden 56, 58 parallel zu der Längsachse 22 verlaufend derart in den Raum 18 gelegt, dass diese von den Verbindungslinien zwischen den ersten Grundfarben oder Basisfarben 32, 38, 40, 42, 44, 46, 48, 50 und der zweiten Basisfarbe oder Modifikatorfarbe 54 geschnitten werden. Diese Verbindungen werden als zweite Geraden 60, 62, 64, 66, 68, 70, 72 bezeichnet. Die Schnittpunkte zwischen den ersten und zweiten Geraden 56, 58 bzw. 60, 62, 64, 66, 68, 70, 72 geben sodann die Koordinaten der Mischfarben an. Entsprechende Schnittpunkte sind beispielhaft mit den Bezugszeichen 74, 76 gekennzeichnet. Jeder der zweiten Basisfarben wird zumindest eine erste Gerade in dem Raum 18 zugeordnet. Werden einer zweiten Basisfarbe mehrere erste Geraden zugeordnet, so unterteilen diese vorzugsweise die zweiten Geraden stets im gleichen Verhältnis. Die einer zweiten Basisfarbe zugeordnete erste Gerade bzw. zugeordneten ersten Geraden schneiden im Ausführungsbeispiel die Ebene 52 in einer Verbindungslinie zwischen der zweiten Basisfarbe 54 und der Längsachse 22.

Die ersten Geraden 56, 58 sollten dabei die Ebene 52 in Punkten senkrecht durchsetzen, durch die die zweiten Geraden 60, 62, 64, 66, 68, 70, 72 in einem vorgegebenen vorzugsweise geradzahligen Verhältnis unterteilt werden. Im vorliegenden Fall werden die zweiten Geraden 60, 62, 64, 66, 68, 70, 72 durch die erste Gerade 56 im Verhältnis 1: 2 und durch die zweite Gerade 58 im Verhältnis 2:1 unterteilt. Hierdurch ergibt sich eine einfache Mischmöglichkeit der ersten und zweiten Grundfarben zur Herstellung der Mischfarben.

Die Fig. 4 stellt eine Schnittdarstellung des Raums 18 in der Ebene 52 dar. Man erkennt, dass im gleichen Abstand zu der Schnittlinie der Ebene 52 mit der Umhüllenden des Raums 18, also dem Kreis 73, die zweiten Basis oder Grundfarben 54, 78, 80, 82, 84, 86 liegen. Die zweiten Basisfarben 54, 78, 80, 82, 84, 86 liegen somit gleichfalls auf einem Kreis 75. Die aus dem Schnittpunkt der ersten und zweiten Geraden 56, 58, 60, 62, 64, 66, 68, 70, 72 sich ergebenden Mischfarben liegen in parallel zu der Ebene 52 verlaufenden Ebene, und zwar auf Umfangsflächen von Zylindern, die koaxial von den Kreisen 74 und 76 umgeben sind und von den ersten Geraden aufgespannt sind.

Im Ausführungsbeispiel sind insgesamt sechs zweite Basisfarben 54, 78, 80, 82, 84, 86 vorgesehen, deren Farben beispielhaft in der Fig. 6 angegeben sind.

Der Anzahl der zweiten Basisfarben 54, 78, 80, 82, 84, 86 entspricht der Anzahl der jeweils auf der Umfangsfläche eines Zylinders verlaufenden ersten Geraden 56, 92, 94, 96, 98, 100 bzw. 58, 102, 104, 106, 108, 110. Im Ausführungsbeispiel sind von den von den jeweiligen ersten Geraden 56, 92, 94, 96, 98, 100 bzw. 58, 102, 104, 106, 108, 110 aufgespannten Zylindern die Schnittlinien in der Ebene 52 mit dem Bezugszeichen 89 bzw. 88 gekennzeichnet. Die Zylinderlängsachsen fallen mit der Längsachse 22 zusammen. Unter Einbeziehung der den Fig. 3 und 4 zu entnehmenden Annahme bezüglich der Anzahl der innerhalb des Raums 18 liegenden ersten Grundfarben 40, 42, 44, 46, 48, 50 und der Anzahl der zweiten Basisfarben 54, 78 80, 82, 84, 86 sowie der Anzahl der ersten Geraden 56, 92, 94, 96, 98, 100 bzw. 58, 102, 104, 106, 108, 110 ergeben sich aus den Schnittpunkten zwischen den ersten und zweiten Geraden folgende Anzahl von Zahnersatzfarben, die gleichmäßig in dem Raum 18 verteilt sind:

2 (erste Geraden) x 8 (zweite Basisfarben) x 6 (erste Basisfarben innerhalb des Raums)

+ 6 (erste Basisfarben innerhalb des Raums) = 102.

Die innerhalb des Raums 18 liegenden ersten Basisfarben 40, 42, 44, 46, 48, 50 müssen zu der Anzahl der in dem Raum 18 liegenden Mischfarben addiert werden, da erste gleichfalls als Farbe für den Zahnersatz verwendet werden können.

Da die Mischfarben gleichmäßig in dem Raum 18 verteilt sind, ist problemlos eine Farbe und damit das Mischungsverhältnis von erster und zweiter Grundfarbe zu bestimmen, die der Farbe des Restgebisses 12 am nächsten kommt. Die mit dem Messgerät 10 gemessene Farbe des Restgebisses 12 wird in dem Rechner in Koordinaten des CIELab-Raums ermittelt. Sodann wird festgestellt, welche Koordinate einer Mischfarbe bzw. einer ersten Grundfarbe der ermittelten Farbe des Restgebisses 12 am nächsten kommt. Diese Mischfarbe wird sodann als Information 24 zur Verfügung gestellt, um in dem angegebenen Verhältnis von erster und zweiter Grundfarbe, also Basismasse und Modifikatormasse die Mischfarbe 30 herzustellen. Kommt die gemessene Farbe des Restgebisses 12 dem Koordinaten einer ersten Basisfarbe am nächsten, so ist es nicht erforderlich, eine zweite Basisfarbe einzusetzen.

Ist anhand der Fig. 3 beschrieben worden, dass der die natürlichen Zahnfarben repräsentierende Raum 18 von einer einzigen Ebene, und zwar der Ebene 52 durchsetzt wird, so sind gemäß der Erfindung zumindest zwei Ebenen vorgesehen. Entsprechend der Darstellung der Fig. 2 können zwei von der Längsachse 22 senkrecht durchsetzte Ebenen 107, 109 festgelegt werden, in denen erneut vorzugsweise außerhalb des Raums 18 zweite Grundfarben 111, 112 festgelegt werden. In jeder Ebene 107, 109 weisen die zweiten Grundfarben 111, 112 wiederum einen gleichen Abstand zur Schnittlinie zwischen der Ebene 107 bzw. 108 und der Umhüllenden des Raums 18 auf. Unter der Voraussetzung, dass die Schnittlinie ein Kreis ist, liegen die zweiten Grundfarben 111, 112 jeweils gleichmäßig auf einem Kreis verteilt in der Ebene 107, 109, dessen Mittelpunkt von der Längsachse 22 durchsetzt ist.

Bevorzugterweise werden pro Ebene sechs zweite Grundfarben 111, 112 festgelegt. Ferner können auch mehr als zwei parallel zueinander verlaufende Ebenen den Raum 18 durchsetzen.

Bei dem Ausführungsbeispiel der Fig. 2 würde sich unter der Voraussetzung, dass sich sechs erste Grundfarben 34, 36 innerhalb des Raums 18 auf der Längsachse 22 befinden und jeweils nur eine erste Gerade 114 zwischen jeder zweiten Basisfarbe 111, 112 und der Längsachse 22 verläuft, die sich parallel zur Längsachse 22 erstreckt, folgende Anzahl von Farben ergeben:

$$8 \text{ (zweite Grundfarbe der ersten Ebene 107) x 1 (Anzahl der ersten Gerade) x 6 (Anzahl der innerhalb des Raums liegenden ersten Grundfarben)} + 8 \text{ (zweite Grundfarben der zweiten Ebene 109) x 1 (Anzahl der ersten Gerade) x 6 (Anzahl der ersten innerhalb des Raums liegenden Grundfarben)} + 6 \text{ (Anzahl der ersten Grundfarben, die auf der Längsachse innerhalb des Raums liegen)} = 102.$$

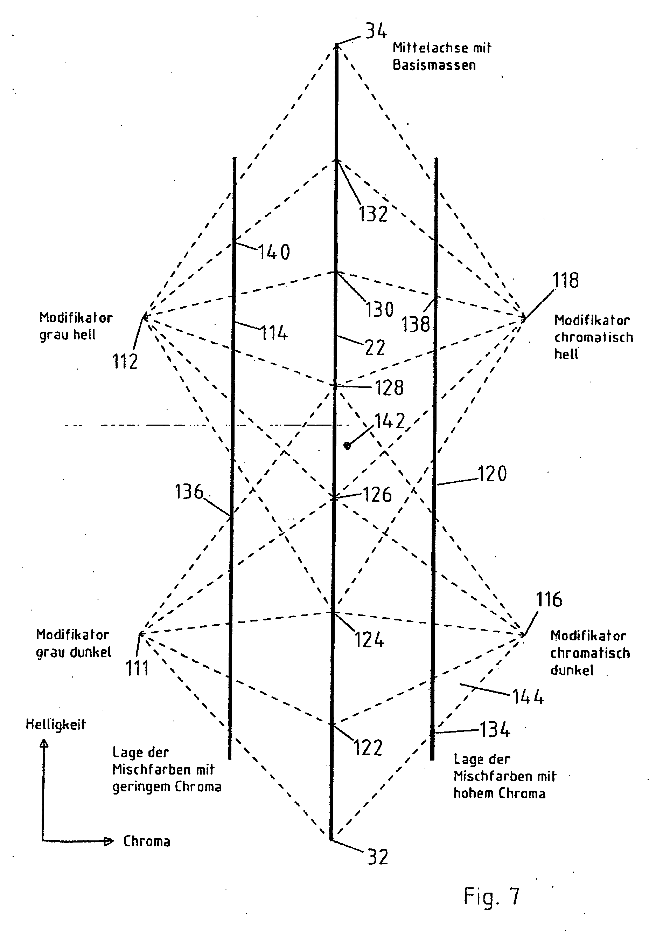

Die Fig. 7 verdeutlicht prinzipiell noch einmal die Bestimmung der Mischfarben bzw. Verwendung der ersten und zweiten Grundfarben unter Berücksichtigung der Annahmen der Fig. 2, d.h. dass zweite Grundfarben 111, 112 bzw. Modifikatormassen in voneinander abweichenden Helligkeitsebenen 107, 109 liegen. Auch erkennt man, wie Mischfarben bestimmbar sind, die im geringen und hohen Chroma liegen. Dabei sind in Fig. 7 der Fig. 2 entsprechende Bezugszeichen verwendet worden. Ergänzend sind die in der Schnittdarstellung in hohen Chroma liegenden zweiten Grundfarben mit den Bezugszeichen 116, 118 und eine weitere erste Gerade mit dem Bezugszeichen 120 gekennzeichnet. Die ersten Grundfarben, die innerhalb des Raums 18 liegen, sind mit dem Bezugszeichen 122, 124, 126, 128, 130, 132 versehen. Man erkennt, dass die ersten Grundfarben 32, 122, 124, 126, 128, 130, 132, 34 einen gleichen Abstand zueinander aufweisen. Die Mischfarben werden sodann durch die durch die Verbindungslinien zwischen den zweiten Grundfarben 111, 112 bzw. 116, 118 und den ersten Grundfarben 32, 122, 124, 126, 128, 130, 132, 34 gebildeten zweiten Geraden und deren Schnittpunkte mit den ersten Geraden 114, 120 festgelegt. Beispielhaft sind einige der Mischfarben mit Bezugszeichen gekennzeichnet, und zwar mit den Bezugszeichen 134, 136, 138, 140.

Anhand der Fig. 7 soll erläutert werden, wie eine Zahnersatzfarbe festgelegt wird. Wird mit dem Handspectrophotometer 10 die Farbe des Restgebisses 12 im CIELab-Raum 18 im Punkt 142 ermittelt, so würde als Farbe für den Zahnersatz diejenige gewählt, die den CIELab-Koordinaten der ersten Basisfarbe 126 entspricht. Liegt in CIELab-Koordinaten die Farbe des Restgebisses 12 im Punkt 144, würde eine Mischfarbe festgelegt, die den CIELab-Koordinaten im Punkt 134 entsprechen. Folglich wird eine Basismasse mit den CIELab-Koordinaten 32 und eine Modifikatormasse mit den CIELab-Koordinaten des Punktes 116 im Verhältnis 1:1 gemischt, um die Farbe für den Zahnersatz herzustellen.

Erfindungsgemäß werden im erforderlichen Umfang erste und/oder zweite Grundfarben gemischt, denen Koordinaten im CIELab-Raum zugeordnet sind, die in unterschiedlichen Ebenen, d. h. Ebenen unterschiedlicher Helligkeit liegen, die von der L-Achse bzw. einer Basislinie senkrecht durchsetzt werden. Die zweiten Grundfarben liegen nicht in dem ellipsoidförmigen Raum des CIELab-Raums in dem im Wesentlichen die Koordinaten der Farben der natürlichen Zähne liegen. Die aus den ersten und zweiten Grundfarben herzustellenden Mischfarben liegen demgegenüber in dem ellipsoidförmigen Raum bzw. ggfs. auf dessen Oberfläche.

**Patentansprüche**

**1.** Verfahren zur Herstellung von Zahnersatzfarben für von einem Restgebiss (12) umgebenen Zahnersatz unter Verwendung von Grund- und/oder Mischfarben, deren Koordinaten im CIELab-Farbraum (20) liegen, in dem die Zahnfarben der natürlichen Zähne im Wesentlichen auf Koordinaten eines ellipsoidförmigen Raumes (18) liegen, dem eine Längsachse (22) oder eine von hell nach dunkel im CIELab-Raum verlaufende Basislinie zugeordnet ist, wobei die Farbe des Restgebisses in Koordinaten des CIELab-Farbraumes ermittelt werden,

**dadurch gekennzeichnet,**
**dass** die Farbe des Restgebisses (12) mittels eines Messgerätes (10) gemessen wird, dass von dem Messgerät den CIELab-Koordinaten der Farbe entsprechende Daten einem Rechner (16) zugeführt werden, in dem den CIELab-Koordinaten der Grund- und Mischfarben entsprechende Daten abgespeichert und mit den Daten der Farbe des Restgebisses verglichen werden, wobei Koordinaten von ersten Grundfarben (32, 34, 36, 38, 40, 42, 44, 46, 48, 50; 122, 124, 126, 128, 130, 132) auf der Längsachse (22) oder der Basislinie des ellipsoidförmigen Raumes (18) liegen, Koordinaten von zweiten Grundfarben (54, 78, 80, 82, 84, 86, 111, 112, 116 118) in zumindest zwei zueinander beabstandeten Ebenen (52, 107, 109) und außerhalb des ellipsoidförmigen Raums liegen, die die Längsachse oder die Basislinie senkrecht schneiden, Koordinaten von Mischfarben auf Schnittpunkten von parallel zu der Längsachse oder der Basislinie verlaufenden ersten Geraden (56, 92, 94, 96, 98, 100; 58, 102, 104, 106, 108, 110; 114, 120) und Verbindungsgeraden (60, 62, 64, 66, 68, 70, 72) zwischen Koordinaten der ersten und zweiten Grundfarben liegen, wobei jede Mischfarbe eine Mischung aus einer ersten und einer zweiten Grundfarbe ist, und Mischfarben unter Berücksichtigung sämtlicher erster und zweiter Grundfarben bereitgestellt werden und dass aufgrund des Vergleiches Informationen erzeugt werden, die das Mischungsverhältnis einer ersten und einer zweiten Grundfarbe (32, 34, 36, 38, 40, 42, 44, 46, 48, 50; 122, 124, 126, 128, 130, 132); (54, 78, 80, 82, 84, 86,111. 112, 116, 118) oder die eine erste Grundfarbe zur Verwendung als die Zahnersatzfarbe betreffen, wobei die zu den Koordinaten der Farbe des Restgebisses (12) am nächsten liegenden Koordinaten einer der Misch- oder Grundfarben als die Zahnersatzfarbe ausgewählt werden.

**2.** Verfahren nach Anspruch 1,
**dadurch gekennzeichnet,**
**dass** die in einer gemeinsamen Ebene (52, 107, 109) liegenden Koordinaten der zweiten Grundfarben (54, 78, 80, 82, 84, 86, 111, 112, 116, 118) auf einem Kreis oder Ellipse mit der Längsachse bzw. Basislinie (22) als Mittelpunkt liegen und/oder dass die in einer gemeinsamen Ebene (52, 107, 109) liegenden Koordinaten der zweiten Grundfarben (54, 78, 80, 82, 84, 86, 111, 112, 116, 118) auf einer Linie liegen, die äquidistant die Schnittlinie zwischen der Ebene und der Umhüllenden des ellipsoidförmigen Raumes umgibt, wobei vorzugsweise der Abstand der in einer Ebene (52) auf dem Kreis oder der Ellipse liegenden aufeinander folgenden Koordinaten der zweiten Grundfarben (54, 78, 80, 82, 84, 86, 111, 112, 116, 118) gleich ist.

**3.** Verfahren nach Anspruch 1 oder 2,
**dadurch gekennzeichnet,**
**dass** eine zweite Gerade (60, 62, 64, 66, 68, 70, 72) zumindest zwei erste Geraden (56, 92, 94, 96, 98, 100; 58, 102, 104, 106, 108, 110; 114, 120) schneidet, wobei insbesondere die zwei ersten Geraden (56, 92, 94, 96, 98, 100; 58, 102, 104, 106, 108, 110; 114, 120) die zweite Gerade (60, 62, 64, 66, 68, 70, 72) zwischen den Koordinaten der ersten und zweiten Grundfarbe (32, 34, 36, 38, 40, 42, 44, 46, 48, 50; 122, 124, 126, 128, 130, 132); (54, 78, 80, 82, 84, 86, 111, 112, 116, 118) im gleichen Verhältnis unterteilen.

**4.** Verfahren nach zumindest einem der vorhergehenden Ansprüche,
**dadurch gekennzeichnet,**
**dass** jede zweite Gerade (60, 62, 64, 66, 68, 70, 72) von jeweils einer ersten Geraden (56, 92, 94, 96, 98, 100; 58, 102, 104, 106, 108, 110; 114, 120) zwischen den Koordinaten der ersten und zweiten Grundfarbe (32, 34, 36, 38, 40, 42, 44, 46, 48, 50; 122, 124, 126, 128, 130,132; 54, 78, 80, 82, 84, 86, 111, 112, 116, 118) im gleichen Verhältnis unterteilt ist und/oder dass die zumindest eine erste Gerade (56, 92, 94, 96, 98, 100; 58, 102, 104, 106, 108, 110; 114, 120) die zweite Gerade (60, 62, 64, 66, 68, 70, 72) zwischen den Koordinaten der ersten und der zweiten Grundfarbe (32, 34, 36, 38, 40, 42, 44, 46, 48, 50; 122, 124, 126, 128, 130, 132; 54, 78, 80, 82, 84, 86, 111, 112, 116, 118) im Verhältnis 1 : n mit n = 1, 2 oder 3 unterteilt und/oder dass die zumindest zwei ersten Geraden (56, 92, 94, 96, 98, 100; 58, 102, 104, 106, 108, 110; 114, 120) die zweite Gerade (60, 62, 64, 66, 68, 70, 72) zwischen den Koordinaten der ersten und der zweiten Grundfarbe (32, 34, 36, 38, 40, 42, 44, 46, 48, 50; 122, 124, 126, 128, 130, 132; 54, 78, 80, 82, 84, 86, 111, 112, 116, 118) im Verhältnis 1 : n mit n = 2 oder 3 unterteilen.

**5.** Verfahren nach zumindest einem der vorhergehenden Ansprüche,
**dadurch gekennzeichnet,**
**dass** zumindest x Grundfarben (32, 34, 36, 38, 40, 42, 44, 46, 48, 50; 122, 124, 126, 128, 130, 132) mit $x \geq 4$, insbesondere mit $x \geq 8$, vorzugsweise mit $8 \leq x \leq 12$ vorgesehen sind.

**6.** Verfahren nach zumindest einem der vorhergehenden Ansprüche,
**dadurch gekennzeichnet,**
**dass** der Abstand aufeinander folgender Koordinaten von ersten Grundfarben (32, 34, 36, 38, 40, 42, 44, 46, 48, 50; 122, 124, 126, 128, 130, 132) auf der Längsachse bzw. Basislinie (22) gleich oder in etwa gleich ist.

7. Verfahren nach zumindest einem der vorhergehenden Ansprüche,
   **dadurch gekennzeichnet,**
   **dass** Koordinaten der hellsten und/oder dunkelsten ersten Grundfarbe (32, 38) außerhalb des die übliche natürliche Zahnfarbe repräsentierenden ellipsoidförmigen Raums (18) liegen.

8. Verfahren nach zumindest einem der vorhergehenden Ansprüche,
   **dadurch gekennzeichnet,**
   **dass** y Koordinaten von zweiten Grundfarben (54, 78, 80, 82, 84, 86, 111, 112, 116, 118) mit zumindest y > 4, vorzugsweise mit zumindest y $\geq$ 6 vorgesehen sind.

**Claims**

1. A method for producing dental prosthesis colors for a dental prosthesis surrounded by a remaining set of teeth (12), using primary and/or mixed colors with coordinates in a CIE1ab color space (20), in which the tooth colors of natural teeth are essentially located on coordinates of an ellipsoid-shaped space (18), which is assigned a longitudinal axis (22) or a base line extending from light to dark through the CIE1ab color space, the color of the remaining set of teeth being determined in coordinates of the CIE1ab color space,
   **characterized in**
   **that** the color of the remaining set of teeth (12) is acquired with a measuring instrument (10),
   **that** the measuring instrument sends data corresponding to the CIE1ab coordinates of the color to a computer (16), in which data corresponding to the CIE1ab coordinates primary and mixed colors is stored and is compared to the data for the color of the remaining set of teeth, with
   coordinates of first primary colors (32, 34, 36, 38, 40, 42, 44, 46, 48, 50; 122, 124, 126, 128, 130, 132) being located on the longitudinal axis (22) or the base line of the ellipsoid-shaped space (18),
   coordinates of second primary colors (54, 78, 80, 82, 84, 86, 111, 112, 116, 118) being located outside of the ellipsoid-spaced shape on at least two planes (52, 107, 109) which are spaced to each other and intersect perpendicularly the longitudinal axis or base line,
   coordinates of mixed colors being located on intersection points of first straight lines (56, 92, 94, 96, 98, 100; 58, 102, 104, 106, 108, 110; 114, 112), which extend in parallel to the longitudinal axis or base line, and connecting straight lines (60, 62, 64, 66, 68, 70, 72) between coordinates of the first and second primary colors, each of said mixed colors being a mixture of a first and a second primary color and mixed colors being provided under consideration of all first and second primary colors,
   and **that** on the basis of the comparison information is generated concerning the ratio of the mixture of a first and second primary color (32, 34, 36, 38, 40, 42, 44, 46, 48, 50; 122, 124, 126, 128, 130, 132); (54, 78, 80, 82, 84, 86, 111, 112, 116, 118) or of the first primary color to be used as the color of the dental prosthesis, with the coordinates of one of the mixed or primary colors that are closest to those of the color of the remaining set of teeth being selected as the color of the dental prosthesis.

2. Method according to claim 1,
   **characterized in**
   **that** the coordinates of the second primary colors (54, 78, 80, 82, 84, 86, 111, 112, 116, 118), which are located on a same plane (52, 107, 109), are positioned on a circle or ellipse with the longitudinal axis, respectively base line (22) as a center, and/or
   **that** the coordinates of the second primary colors (54, 78, 80, 82, 84, 86, 111, 112, 116, 118), which are located on a same plane (52, 107, 109), are positioned on a line surrounding equidistantly the intersecting line between the plane and the envelope of the ellipsoid-shaped space,
   with
   preferably the distance of the successive coordinates of the second primary colors (54, 78, 80, 82, 84, 86, 111, 112, 116, 118) located in a plane (52) on the circle or ellipse being equal.

3. Method according to claims 1 or 2,
   **characterized in**
   **that** a second straight line (60, 62, 64, 66, 68, 70, 72) intersects at least two first straight lines (56, 92, 94, 96, 98, 100; 58, 102, 104, 106, 108, 110; 114, 120),
   with

especially the two first straight lines (56, 92, 94, 96, 98, 100; 58, 102, 104, 106, 108, 110; 114, 120) subdividing the second straight line (60, 62, 64, 66, 68, 70, 72) between the coordinates of the first and second primary colors into equal proportions.

4. Method according to at least one of the preceding claims,
   **characterized in**
   **that** each second straight line (60, 62, 64, 66, 68, 70, 72) is subdivided into the same proportion by a first straight line (56, 92, 94, 96, 98, 100; 58, 102, 104, 106, 108, 110; 114, 120) between the coordinates of the first and second primary color (32, 34, 36, 38, 40, 42, 44, 46, 48, 50; 122, 124, 126, 128, 130, 132); (54, 78, 80, 82, 84, 86, 111, 112, 116, 118)
   and/or
   **that** the at least one first straight line (56, 92, 94, 96, 98, 100; 58, 102, 104, 106, 108, 110; 114, 120) subdivides the second straight line (60, 62, 64, 66, 68, 70, 72) between coordinates of the first and second primary color (32, 34, 36, 38, 40, 42, 44, 46, 48, 50; 122, 124, 126, 128, 130, 132; 54, 78, 80, 82, 84, 86, 111, 112, 116, 118) in the ratio 1 : n with n = 1, 2 or 3;
   and/or
   **that** the at least two first straight lines (56, 92, 94, 96, 98, 100; 58, 102, 104, 106, 108, 110; 114, 120) subdivide the second straight line (60, 62, 64, 66, 68, 70, 72) between the coordinates of the first and second primary color (32, 34, 36, 38, 40, 42, 44, 46, 48, 50; 122, 124, 126, 128, 130, 132; 54, 78, 80, 82, 84, 86, 111, 112, 116, 118) in the ratio 1 : n with n= 2 or 3.

5. Method according to at least one of the preceding claims
   **characterized in**
   **that** at least x primary colors (32, 34, 36, 38, 40, 42, 44, 46, 48, 50; 122, 124, 126, 128, 130, 132) are provided with x ≥ 4, especially with x ≥ 8, preferably with 8 ≤ x ≤ 12.

6. Method according to at least one of the preceding claims
   **characterized in**
   **that** the distance of successive coordinates of first primary colors (32, 34, 36, 38, 40, 42, 44, 46, 48, 50; 122, 124, 126, 128, 130, 132) on the longitudinal axis, respectively base line (22) is equal or approximately equal.

7. Method according to at least one of the preceding claims
   **characterized in**
   **that** coordinates of the lightest and/or darkest first primary color (32, 38) are located outside the ellipse-shaped space (18) representing the usual natural tooth color.

8. Method according to at least one of the preceding claims
   **characterized in**
   **that** y coordinates of second primary colors (54, 78, 80, 82, 84, 86, 111, 112, 116, 118) are provided with at least y > 4, preferably with at least y ≥ 6.

**Revendications**

1. Procédé de fabrication de couleurs de prothèses dentaires pour une prothèse dentaire entourée de dents voisines (12) à partir de couleurs primaires et/ou mélangées, dont les coordonnées se trouvent dans l'espace colorimétrique CIELab (20) dans lequel les couleurs des dents naturelles se trouvent essentiellement sur les coordonnés d'un espace de forme ellipsoïdale (18) auquel est associé(e) un axe longitudinal (22) ou une ligne de base s'étendant de clair à foncé dans l'espace colorimétrique CIELab, sachant que la couleur des autres dents est déterminée en coordonnées de l'espace colorimétrique CIELab,
   **caractérisé en ce**
   **que** la couleur des dents voisines (12) est mesurée à l'aide d'un appareil de mesure (10), que l'appareil de mesure transmet des données correspondant aux coordonnées CIELab de la couleur à un ordinateur (16) dans lequel des données correspondant aux coordonnées CIELab des couleurs primaires et mélangées sont enregistrées et comparées avec les données de la couleur des dents voisines, les coordonnées de premières couleurs primaires (32, 34, 36, 38, 40, 42, 44, 46, 48, 50 ; 122, 124, 126, 128, 130, 132) se trouvant sur l'axe longitudinal (22) ou la ligne de base de l'espace de forme ellipsoïdale (18), les coordonnées de secondes couleurs primaires (54, 78, 80, 82, 84, 86, 111, 112, 116, 118) se trouvant sur au moins deux plans (52, 107, 109) à distance l'un de l'autre et en dehors de l'espace de forme ellipsoïdale, lesquels plans coupent verticalement l'axe longitudinal ou la ligne de base, les coordonnées de couleurs mélangées se trouvant sur des points d'intersection de premières droites (56, 92, 94, 96, 98, 100 ; 58, 102, 104, 106, 108, 110 ; 114, 120), s'étendant parallèlement à l'axe longitudinal ou à la ligne de base, et de droites de jonction (60, 62, 64, 66, 68, 70, 72) entre les coordonnées des premières et secondes couleurs primaires, chaque couleur mélangée étant un mélange d'une première et d'une seconde couleur primaire, et les couleurs mélangées étant mises à disposition en considération de l'ensemble des premières et secondes couleurs primaires, et que sont produites, sur la base de cette comparaison, des informations concernant le rapport de mélange d'une première et d'une seconde couleur primaire (32, 34, 36, 38, 40, 42, 44, 46, 48, 50 ; 122, 124, 126, 128, 130, 132) ; (54, 78, 80, 82, 84, 86, 111, 112, 116, 118) ou l'une des couleurs primaires devant être utilisée comme couleur de la prothèse dentaire, sachant que l'une des couleurs primaires ou mélangées dont les coordonnées se rapprochent le plus des coordonnées de la couleur des dents voisines (12) est choisie comme couleur de la prothèse dentaire.

2. Procédé selon la revendication 1,
   **caractérisé en ce**
   **que** les coordonnées des secondes couleurs primaires (54, 78, 80, 82, 84, 86, 111, 112, 116, 118) situées sur un plan commun (52, 107, 109) se trouvent sur un cercle ou une ellipse ayant l'axe longitudinal ou la ligne de base (22) pour point central et/ou que les coordonnées des secondes couleurs primaires (54, 78, 80, 82, 84, 86, 111, 112, 116, 118) situées sur un plan commun (52, 107, 109) se trouvent sur une ligne qui entoure à équidistance la ligne d'intersection entre le plan et la ligne enveloppante de l'espace de forme ellipsoïdale, sachant que la distance entre les coordonnées successives des secondes couleurs primaires (54, 78, 80, 82, 84, 86, 111, 112, 116, 118) situées sur un plan (52) sur le cercle ou l'ellipse est de préférence identique.

3. Procédé selon la revendication 1 ou 2,
   **caractérisé en ce**
   **qu'**une seconde droite (60, 62, 64, 66, 68, 70, 72) coupe au moins deux premières droites (56, 92, 94, 96, 98, 100 ; 58, 102, 104, 106, 108, 110 ; 114, 120), sachant en particulier que les deux premières droites (56, 92, 94, 96, 98, 100 ; 58, 102, 104, 106, 108, 110 ; 114, 120) divisent à rapports égaux la seconde droite (60, 62, 64, 66, 68, 70, 72) entre les coordonnées de la première et de la seconde couleur primaire (32, 34, 36, 38, 40, 42, 44, 46, 48, 50 ; 122, 124, 126, 128, 130, 132) ; (54, 78, 80, 82, 84, 86, 111, 112, 116, 118).

4. Procédé selon au moins l'une des revendications précédentes,
   **caractérisé en ce**
   **qu'**une droite sur deux (60, 62, 64, 66, 68, 70, 72) est divisée à rapports égaux par respectivement une première droite (56, 92, 94, 96, 98, 100 ; 58, 102, 104, 106, 108, 110 ; 114, 120) entre les coordonnées de la première et de la seconde couleur primaire (32, 34, 36, 38, 40, 42, 44, 46, 48, 50 ; 122, 124, 126, 128, 130, 132 ; 54, 78, 80, 82, 84, 86, 111, 112, 116, 118) et/ou que l'au moins une première droite (56, 92, 94, 96, 98, 100 ; 58, 102, 104, 106, 108, 110 ; 114, 120) divise la seconde droite (60, 62, 64, 66, 68, 70, 72) entre les coordonnées de la première et de la seconde couleur primaire (32, 34, 36, 38, 40, 42, 44, 46, 48, 50 ; 122, 124, 126, 128, 130, 132 ; 54, 78, 80, 82, 84, 86, 111, 112, 116, 118) selon le rapport 1 : n, où n = 1, 2 ou 3, et/ou que les au moins deux premières droites (56, 92, 94, 96, 98, 100 ; 58, 102, 104, 106, 108, 110 ; 114, 120) divisent la seconde droite (60, 62, 64, 66, 68, 70, 72) entre les coordonnées de la première et de la seconde couleur primaire (32, 34, 36, 38, 40, 42, 44, 46, 48, 50 ; 122, 124, 126, 128, 130, 132 ; 54, 78, 80, 82, 84, 86, 112, 116, 118) selon le rapport 1 : n, où n = 2 ou 3.

5. Procédé selon au moins l'une des revendications précédentes,
   **caractérisé en ce**
   **que** sont prévues au moins x couleurs primaires (32, 34, 36, 38, 40, 42, 44, 46, 48, 50 ; 122, 124, 126, 128, 130, 132) où $x \geq 4$, en particulier où $x \geq 8$, de préférence où $8 \leq x \leq 12$.

6. Procédé selon au moins l'une des revendications précédentes,
   **caractérisé en ce**
   **que** la distance entre les coordonnées successives de premières couleurs primaires (32, 34, 36, 38, 40, 42, 44, 46, 48, 50 ; 122, 124, 126, 128, 130, 132) sur l'axe longitudinal ou la ligne de base (22) est identique ou approximativement identique.

7. Procédé selon au moins l'une des revendications précédentes,
   **caractérisé en ce**
   **que** des coordonnées de la première couleur primaire (32, 38) la plus claire et/ou la plus sombre se trouvent en dehors de l'espace de forme ellipsoïdale (18) représentant la couleur naturelle habituelle des dents.

8. Procédé selon au moins l'une des revendications précédentes, **caractérisé en ce que** sont prévues y coordonnées de secondes couleurs primaires (54, 78, 80, 82, 84, 86, 111, 116, 118) où au moins y > 4, de préférence où au moins y ≥ 6.

Fig. 1

Helligkeit
L*

zentrale Achse
mit 8 Basismassen

38

22

109

114

36

2 Ringe um die Zentrale
Achse mit 6 Modifikatoren

112

34

107

1:1 Mischungen

18

b*

32

a*

Chroma

Fig. 2

Fig. 3

b*

73    78    75    52

54    80

102

58   56   92

89         104
           94

110        106

100   96

98   108

86

84

L*                                    a*

O  Lage der Modifikatoren

O  Grenze nat.Zahnfarben

O  Lage der 2:1- Mischungen

O  Lage der 1:2 - Mischungen

Fig. 4

Gelb b*

Helligkeit
Value L*

54

Gelb/Chr. 78

80

Farbton
Hue h

Gelb/grau

Chromat.

Farbstärke
Chroma C*

52

Schnitt durch
den Farbraum
natürl. Zähne

18

Rot/Chr.

Grau

82

84

86

Rot/Grau

Rot a*

Fig. 6

L*

22

18

20

h*

a*

Fig. 5

34 — Mittelachse mit Basismassen

132

140

118 — Modifikator chromatisch hell

Modifikator grau hell

112

130

138

114

22

128

142

120

136

126

116 — Modifikator chromatisch dunkel

Modifikator grau dunkel

111

124

144

134

Helligkeit

Lage der Mischfarben mit geringem Chroma

122

Lage der Mischfarben mit hohem Chroma

Chroma

32

Fig. 7

**EP 1 882 918 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0147232 A
- EP 0591958 B
- US 6030209 A
- EP 1068841 B